(19) Europäisches Patentamt

European Patent Office

Office européen des brevets

(11) **EP 1 047 180 A2**

(12) **EUROPÄISCHE PATENTANMELDUNG**

(43) Veröffentlichungstag:
**25.10.2000 Patentblatt 2000/43**

(51) Int. Cl.⁷: $H02M\ 7/523$, $G05F\ 1/618$

(21) Anmeldenummer: **00107178.6**

(22) Anmeldetag: **11.04.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **20.04.1999 DE 19917732**
**23.09.1999 DE 19945864**

(71) Anmelder: **ABB PATENT GmbH**
**68309 Mannheim (DE)**

(72) Erfinder:
**Teichmann, Ralph, Dipl.-Ing.**
**01139 Dresden (DE)**

(74) Vertreter: **Miller, Toivo et al**
**ABB Patent GmbH**
**Postfach 10 03 51**
**68128 Mannheim (DE)**

(54) **ARCP Dreipunkt- oder Mehrpunktstromrichter**

(57)     Es wird ein Dreipunkt- oder Mehrpunktstromrichter vorgeschlagen,

- mit einer Reihenschaltung von mindestens vier Hauptschaltern ($S_1...S_8$) pro Stromrichterphase, welche elektrisch parallel zwischen einer positiven und einer negativen Gleichspannungsschiene (2, 4) geschalten sind,
- wobei parallel zu jedem einzelnen Hauptschalter eine einzelne Entlastungskapazität ($C_1...C_8$) angeordnet ist,
- wobei zwischen den Gleichspannungsschienen (2, 4) mindestens zwei Stromrichterebenen gebildet sind, deren Verbindungspunkt (0) bzw. Verbindungspunkte (0, 1', 3') und Spannungsmittelpunkte (1, 3, 11, 12, 13, 14) verfügbar sind,
- wobei der Ausgang der Stromrichterphase (10) über eine Reihenschaltung mindestens einer Resonanz-Induktivität ($L_{aux}$, $L_{aux1}$, $L_{aux2}$) und unabhängig steuerbarer bidirektionaler Hilfsschalter ($S_{aux1}...S_{aux4}$) mit den Spannungsmittelpunkten (1, 3, 11, 12, 13, 14) der Stromrichterebenen verbunden ist,
- wobei die Verbindungspunkte (7, 9, 17, 19, 27, 49) der Entlastungskapazitäten ($C_1...C_8$), welche nicht gleichzeitig den Ausgang der Stromrichterphase (10) bilden, über Ladungssteuerungsschalter ($S_{n\text{-}NPC}$, $S_{p\text{-}NPC}$, $S_{n\text{-}NPC1}...\ S_{n\text{-}NPC3}$, $S_{p\text{-}NPC1}...\ S_{p\text{-}NPC3}$) mit dem Verbindungspunkt (0) bzw. den Verbindungspunkten (0, 1', 3') der Stromrichterebenen verbunden sind.

**Fig. 1**

Printed by Xerox (UK) Business Services
2.16.7 (HRS)/3.6

**Beschreibung**

Die Erfindung bezieht sich auf einen ARCP Dreipunkt- oder Mehrpunktstromrichter und insbesondere auf weich schaltende Mehrpunktstromrichtertopologien für Hochleistungsstromrichter.

Hart schaltende Mehrpunktstromrichter, wie sie z.B. von A. Nabae et. al. in der Veröffentlichung "A New Neutral Point Clamped PWM Inverter", in den „Transactions of the IEEE Industrial Applications Society", Vol. IA-17, No. 5, 1981 vorgeschlagen wurden, werden im Hochleistungsbereich zur Steuerung von Drehstromantrieben bzw. bei Energieübertragungsanlagen zur Netzkopplung und Kompensation eingesetzt. Das Mehrpunktstromrichterkonzept hat sich insbesondere bei hohen Spannungsebenen bewährt, in denen die maximale Sperrspannung eines heute verfügbaren einzelnen Halbleiterventiles nicht ausreicht.

Gegenwärtig werden in den Mehrpunktstromrichtern mit Spannungszwischenkreis im hohen Leistungsbereich GTO Schalter mit Inversdioden eingesetzt. Bei dieser Konfiguration müssen die maximal auftretenden Stromanstiege di/dt und Spannungsanstiege du/dt durch passive Begrenzernetzwerke begrenzt werden, um eine Zerstörung der Halbleiterventile zu vermeiden. Diese Netzwerke sind oft stark verlustbehaftet und tragen wesentlich zur Stromrichterkomplexität und den Stromrichterkosten bei.

Die maximal erreichbare Schaltfrequenz in diesen Hochleistungsstromrichtern ist begrenzt durch die im Halbleiter auftretenden Schaltverluste sowie durch die minimalen Schalt- und Erholzeiten der Halbleiterbauelemente. Da die Schaltfrequenz direkten Einfluß auf die Qualität der elektrischen Eingangs- und Ausgangsgrößen und somit auf das gesamte Systemdesign hat, ist die erreichbare Schaltfrequenz ein wesentliches Gütekriterium für einen Stromrichter.

Fortschritte in der Leistungshalbleiterentwicklung ermöglichen heute einen Stromrichterbetrieb mit wesentlich höherem di/dt und du/dt, was eine beträchtliche Verkleinerung oder sogar den Verzicht auf die Begrenzernetzwerke zur Folge hat. Die gegenwärtige Grenze in der erreichbaren Schaltfrequenz ist somit im wesentlichen nur noch durch die maximal zulässigen Halbleiterverluste gegeben.

Zur Erhöhung der maximalen Schaltfrequenz in Stromrichtern im kleinen und mittleren Leistungsbereich wurden verschiedene weich schaltende Stromrichtertopologien vorgestellt, die eine Reduktion der Schaltverluste ermöglichen. Insbesondere das im Patent US 5047913 von R. De Doncker et. al. vorgeschlagene „Auxiliary Resonant Commutated Pole" (ARCP) Prinzip für Zweipunktstromrichter eignet sich sehr gut zur Reduzierung von Schaltverlusten. Bei einem solchen ARCP Stromrichter ist jedem Hauptschalter ein Entlastungskondensator elektrisch parallel geschaltet. Außerdem ist eine Hilfsschaltung, bestehend aus einem Hilfsschalter, der elektrisch in Reihe mit einer Resonanz-Induktivität geschaltet ist, vorgesehen, die einen Mittelpunkt eines Gleichspannungs-Zwischenkreis-Kondensators mit einem Ausgangsanschluß der Stromrichterphase verbindet.

Neben der drastischen Reduzierung der Schaltverluste ermöglicht das ARCP Prinzip auch eine Steuerung des maximalen du/dt bzw. des di/dt, was neben der Möglichkeit des Einsatzes kritischer Halbleiterschalter auch eine Reduzierung der Beanspruchung der Endwindungen in Drehstrommotoren mit sich bringt.

Möglichkeiten der Erweiterung dieses ARCP Prinzips auf Dreipunktstromrichter mit Entkopplungsdioden wurden von Cho et. al. auf der IEEE Konferenz PESC 1996, im Patent DE 19536470 von Dr. A. Mertens und M. Bruckmann und von D.G. Rouaud et. al. im Patent US 5684688 vorgestellt. In diesen Lösungen ist der Stromrichterausgang wieder mit mindestens einer Resonanz-Induktivität verbunden, die über mindestens zwei bidirektionale Schalter unabhängig mit den zwei Spannungsmittelpunkten der zwei Stromrichterebenen im Dreipunktstromrichter verbunden werden können. Der Unterschied in den Topologien ist in der Anordnung der Entlastungskapazitäten für die vier Hauptschalter zu finden. Das Problem der unsymmetrischen Ladungsverschiebung zwischen der oberen und der unteren Stromrichterebene im Kommutierungsfall wurde auf vielfältige Weise durch Variation der Anzahl und Anordnung der Entlastungskapazitäten zu lösen versucht. Bisher konnte jedoch nicht der Idealfall, der eine maximale Hauptschalterentlastung und gleichmäßige Kondensatorbelastung garantiert, gefunden werden, d.h. eine Parallelschaltung von exakt gleichen Entlastungskapazitäten so nah wie möglich am jeweiligen Hauptschalter.

Der Erfindung liegt die Aufgabe zugrunde, einen Dreipunkt- oder Mehrpunktstromrichter mit ARCP Stromrichtertopologie anzugeben, dessen Entlastungsnetzwerk für jeden Hauptschalter gleich ist und direkt parallel zu jedem Hauptschalter angeordnet werden kann.

Die Aufgabe wird erfindungsgemäß alternativ durch die im Anspruch 1 und 5 angegebenen Topologien gelöst.

Durch die Anordnung mehrerer Stromrichterphasen, die jeweils elektrisch parallel zu einem aus einer Reihenschaltung zweier Kondensatoren bestehenden Gleichspannungs-Zwischenkreises geschaltet sind, eine obere und untere Stromrichterebene mit jeweils zwei Hauptschaltern aufweisen und deren Verbindungspunkte jeweils mittels einer Entkopplungsdiode mit dem Verbindungspunkt der beiden Kondensatoren des Gleichspannungs-Zwischenkreises verknüpft sind, erhält man den Aufbau eines Dreipunktstromrichters.

Ausgehend von der hart schaltenden Dreipunktstromrichtertopologie mit Entkopplungsdioden kann die weich schaltende ARCP Dreipunktstromrichtertopologie mit Ladungssteuerungsschaltern durch folgende Modifikationen und Erweiterungen erzielt werden:

1. In jeder Stromrichterebene muß durch eine Serienschaltung von zwei Kapazitäten oder alternativen Spannungsquellen dafür gesorgt werden, daß ein Spannungsmittelpunkt bezüglich der Stromrichterebene zur Verfügung steht.

2. Der Ausgang der Stromrichterphase muß durch eine Reihenschaltung einer Resonanz-Induktivität und unabhängig steuerbarer bidirektionaler Hilfsschalter mit den Spannungsmittelpunkten in jeder Stromrichterebene verbunden werden. Dabei ist jeweils ein Anschluß eines Hilfsschalters mit einem Spannungsmittelpunkt einer Stromrichterebene und ein Anschluß der Resonanz-Induktivität mit dem Ausgang der Stromrichterphase verbunden.

3. Parallel zu jedem Hauptschalter muß eine Entlastungskapazität angebracht werden.

4. Ein steuerbarer Hilfsschalter muß antiparallel zu jeder Entkopplungsdiode geschalten werden.

Somit erhält man einen verlustarmen ARCP Stromrichter mit Ladungssteuerungsschaltern gemäß den Merkmalen des Anspruchs 1 oder 5, der die Vorteile eines Dreipunktstromrichters bzw. Mehrpunktstromrichters mit denen eines ARCP Stromrichters kombiniert, wobei eine maximale Schaltentlastung erzielt werden kann. Eine Steuerung der Ladung der Entlastungskapazitäten über den Hauptschaltern erfolgt durch zusätzliche Ladungssteuerungsschalter, die antiparallel zu den Entkopplungsdioden des Dreipunktstromrichters geschalten sind.

Mit dieser Topologie ist es möglich, den Schaltaugenblick der Hauptschalter der Stromrichterphase frei festzulegen, wodurch herkömmliche Pulsweitenmodulationsverfahren eingesetzt werden können. Die Hauptschalter und die antiparallelen Hilfsschalter zu den Entkopplungsdioden — die Ladungssteuerungsschalter - in dieser ARCP Stromrichterphase schalten bei verschwindender Spannung über diesen Bauelementen ein und aus (Zero-Voltage-Switch-(ZVS)-Prinzip). Die Hilfsschalter in Reihe zur Resonanz-Induktivität werden nach dem Zero-Current-Switch-(ZCS-) Prinzip ebenfalls schaltentlastend betrieben. Beim ZCS-Prinzip wird der Hilfsschalter bei verschwindendem Strom ein- und abgeschaltet. Das heißt, alle in dieser Stromrichterphase verwendeten Halbleiterschalter schalten verlustarm. Die spannungsmäßige Auslegung der Hauptschalter, Hilfsschalter und Ladungssteuerungsschalter sowie die Betriebsweise der Schalter kann der nachstehenden Tabelle 1 entnommen werden, wobei zur Erläuterung der angeführten Bezugszeichen auf die Zeichnung hingewiesen wird. Die Auslegung der Schalter bzgl. des Nennstromes hängt von den Schaltungsparametern, die den Effektivstrom durch den Schalter bestimmen, und den thermischen und elektrischen Eigenschaften der Schalter ab. Die Vorteile der ARCP Dreipunktstromrichtertopologie mit Ladungssteuerungsschaltern gegenüber den bisher vorgestellten ARCP Dreipunktstromrichtern sind:

a) eine gleichmäßige Strombelastung der Entlastungskapazitäten,

b) eine Minimierung von Streuinduktivitäten und der damit verbundenen optimalen Entlastung der Hauptschalter,

c) eine Minimierung der parasitären Schwingungen nach den Kommutierungen,

d) eine Möglichkeit der Aufteilung der hohen Verluste der Halbleiter im Nullpfad bei kleinen Ausgangsspannungen und hohem Ausgangsstrom auf die durch Parallelschaltung der Nullpfade erzielbare doppelte Anzahl an Halbleitern,

e) eine Realisierung der Entkopplungsdiode und des antiparallelen Schalters in einem Standardmodul,

f) erzielbare Fertigungskostenvorteile durch die Gleichheit aller entlasteten Hauptschaltermodule.

Tabelle 1

| Schalterauslegung | | |
|---|---|---|
| | Typ | Maximale Spannungsbe-lastung |
| Hauptschalter ($S_1$, $S_2$, $S_3$, $S_4$) | ZVS | $V_{dc}/2$ |
| Ladungssteuerungsschalter ($S_{p\text{-}NPC}$, $S_{n\text{-}NPC}$) | ZVS | $V_{dc}/2$ |
| Hilfsschalter $S_{aux3}$ | ZCS | $V_{dc}/2$ |
| Hilfsschalter $S_{aux1}$, $S_{aux2}$ | ZCS | $3V_{dc}/4$ |

Zur weiteren Erläuterung der Erfindung wird auf die Zeichnung Bezug genommen, in der unterschiedliche Ausführungsbeispiele einer Stromrichterphase eines verlustarmen ARCP Stromrichters mit Ladungssteuerungsschaltern schematisch veranschaulicht sind. Es zeigen:

| Fig. 1 | eine Ausgangsphase eines ARCP Dreipunktstromrichters mit Ladungssteuerungsschaltern gemäß Erfindung, |
| Fig. 2, 3 | alternative Möglichkeiten zur Anordnung der Induktivität(en) im ARCP Dreipunktstromrichter mit Ladungssteuerungsschaltern, |
| Fig. 4 | eine Phase eines ARCP Dreipunktstromrichters, die direkte Wechsel von der maximalen positiven Spannung zur maximalen negativen Spannung zuläßt, |
| Fig. 5 | eine alternative Realisierungsmöglichkeit für die in Fig. 4 gezeigte Stromrichterphase, |
| Fig. 6 | eine Phase eines ARCP Fünfpunktstromrichters mit Ladungssteuerungsschaltern, welche nach den benannten Designrichtlinien entworfen wurde, |
| Fig. 7 | qualitativ den Verlauf der Spannung über den Entlastungskapazitäten $C_1$ bis $C_4$, die Spannung über den Ladungssteuerungsschaltern $v_{SpNPC}$ und $v_{SnNPC}$ sowie die Ausgangsspannung $v_o$ für einen ARCP Dreipunktstromrichter mit Ladungssteuerungsschaltern und positiven Ausgangsstrom $i_o$, |
| Fig. 8 | die Schaltzustände für alle steuerbaren Schalter innerhalb einer Schaltsequenz für einen ARCP Dreipunktstromrichter mit Ladungssteuerungsschaltern und positiven Ausgangsstrom $i_o$, |
| Fig. 9 | qualitativ den Verlauf der Ströme durch die Ladungssteuerungsschalter, bestehend aus den aktiven Schaltern $T_{p\text{-}NPC}$, $T_{n\text{-}NPC}$ und den Entkopplungsdioden $D_{p\text{-}NPC}$ und $D_{n\text{-}NPC}$, sowie den Strom durch die Resonanz-Induktivität $L_{aux}$ für einen ARCP Dreipunktstromrichter, |
| Fig. 10, 11,12 | ARCP unterstützte kapazitive Kommutierungen für einen ARCP Dreipunktstromrichter mit Ladungssteuerungsschaltern (entsprechend den Fig. 7 bis 9). |

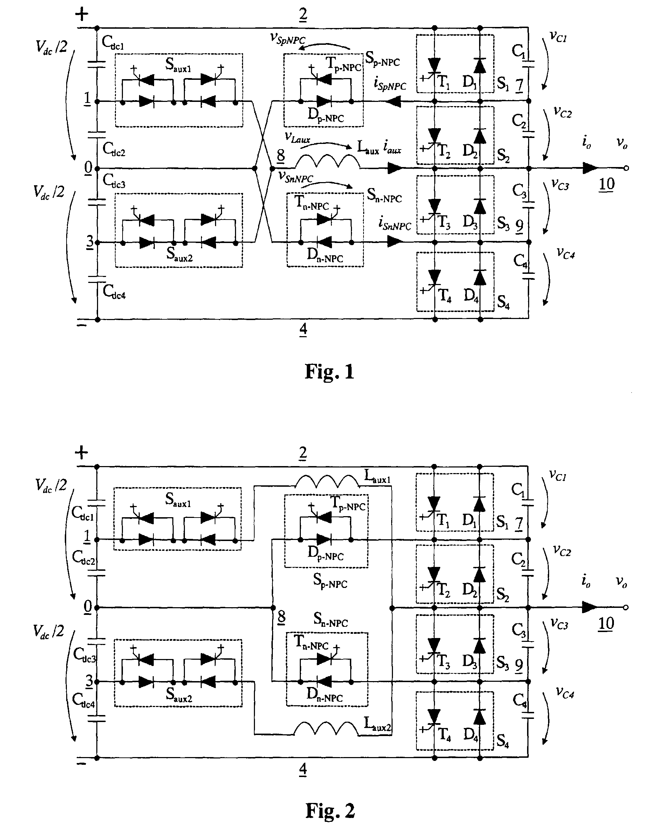

Fig. 1 zeigt den Aufbau einer Ausgangsphase eines Dreipunktstromrichters, bestehend aus einer Reihenschaltung von Hauptschaltern $S_1$, $S_2$, $S_3$, $S_4$ die elektrisch parallel zu einem Gleichspannungszwischenkreis geschalten sind, welcher aus einer Reihenschaltung von gleich großen Kapazitäten (Kondensatoren) $C_{dc1}$, $C_{dc2}$, $C_{dc3}$, $C_{dc4}$ besteht und damit eine positive Gleichspannungsschiene 2 mit einer negativen Gleichspannungsschiene 4 verbindet. Während der Verbindungspunkt 0 der Kapazitäten $C_{dc2}$ und $C_{dc3}$ als Stromrichtermittelpunkt bezeichnet wird, repräsentieren Verbindungspunkte 1 und 3 die Spannungsmittelpunkte bezüglich der oberen und unteren Stromrichterebene.

Direkt parallel zu jedem Hauptschalter $S_1$ bis $S_4$ sind Entlastungskapazitäten $C_1$, $C_2$, $C_3$, $C_4$ geschalten. Die Schalter $S_1$ bis $S_4$ bestehen jeweils aus einem aktiv ausschaltbaren Leistungshalbleiter $T_1$, $T_2$, $T_3$, $T_4$ mit antiparallel geschalteter Diode $D_1$, $D_2$, $D_3$, $D_4$. Der Stromrichtermittelpunkt 0 ist mit dem Verbindungspunkt 7 der Hauptschalter $S_1$ und $S_2$ durch einen Ladungssteuerungsschalter $S_{p\text{-}NPC}$ und mit dem Verbindungspunkt 9 der Hauptschalter $S_3$ und $S_4$ durch einen Ladungssteuerungsschalter $S_{p\text{-}NPC}$ verbunden. Diese Ladungssteuerungsschalter bestehen jeweils aus einem aktiv ausschaltbaren Leistungshalbleiter $T_{p\text{-}NPC}$, $T_{n\text{-}NPC}$ mit antiparaller Diode $D_{p\text{-}NPC}$, $D_{p\text{-}NPC}$, die als Entkopplungsdiode (n = negativ, p = positiv) fungiert.

Zusätzlich sind die Spannungsmittelpunkte 1 und 3 der Stromrichterebenen jeweils über einen Hilfsschalter $S_{aux1}$ und $S_{aux2}$ mit einer Resonanz-Induktivität (allgemein Induktivität) $L_{aux}$ verbunden — siehe Verbindungspunkt 8. Die andere Seite der Resonanz-Induktivität $L_{aux}$ ist am Ausgang der Stromrichterphase 10 (gleichzeitig auch als Verbindungspunkt bezeichnet) angeschlossen. Die Hilfsschalter bestehen aus einer Serienschaltung von zwei aktiv ausschaltbaren Leistungshalbleitern mit antiparallelen Dioden, die so miteinander verschalten sind, daß ein bidirektionaler Schalter entsteht.

Fig. 2 zeigt eine vorteilhafte Ausführungsform der Stromrichterphase, wobei gleiche Bauelemente mit denselben Bezugszeichen versehen sind wie in Fig. 1. Gegenüber der Ausführungsform in Fig. 1 sind anstelle einer Resonanz-Induktivität $L_{aux}$ zwei Resonanz-Induktivitäten $L_{aux1}$ und $L_{aux2}$ vorgesehen. Diese beiden Resonanz-Induktivitäten $L_{aux1}$ und $L_{aux2}$ sind jeweils mit einem Hilfsschalter $S_{aux1}$ bzw. $S_{aux2}$ elektrisch in Reihe geschaltet.

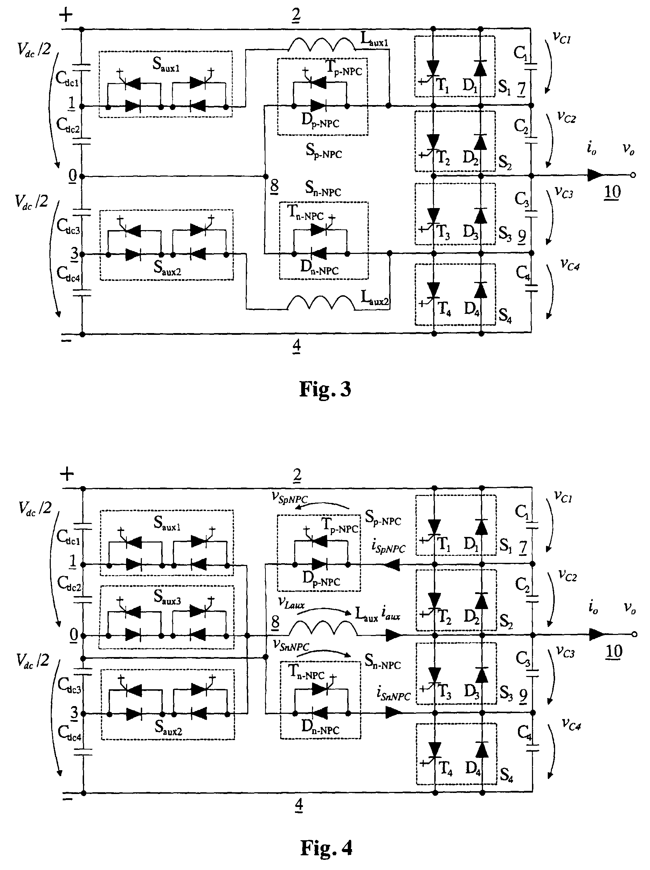

Die Ausführungsform gemäß Fig. 3 unterscheidet sich gegenüber der Ausführungsform in Fig. 2 durch die Ankopplung der Resonanz-Induktivitäten an die Stromrichterphase. Diese beiden Resonanz-Induktivitäten $L_{aux1}$ und $L_{aux2}$ sind jeweils mit einem Hilfsschalter $S_{aux1}$ bzw. $S_{aux2}$ elektrisch in Reihe geschaltet und direkt an die Verbindungspunkte 7 und 9 angeschlossen. Der wesentliche Vorteile dieser Anordnung besteht darin, daß die maximale Sperrspannungsbelastung der Hilfsschalter $S_{aux1}$ uns $S_{aux2}$ nur $V_{dc}/4$ beträgt.

Die Ausführungsform gemäß Fig. 4 unterscheidet sich gegenüber der Ausführungsform in Fig. 1 durch die Ankopplung eines zusätzlichen Hilfsschalters $S_{aux3}$ zwischen dem Stromrichtermittelpunkt 0 und dem Anschlußpunkt 8 der Resonanz-Induktivität . Dies erweitert die Betriebsmöglichkeiten des Stromrichters derart, daß entlastete Schalttransitionen von der maximalen negativen Gleichspannungsebene, der Gleichspannungsschiene 4, zur maximalen positiven Gleichspannungsebene, der Gleichspannungsschiene 2, möglich sind.

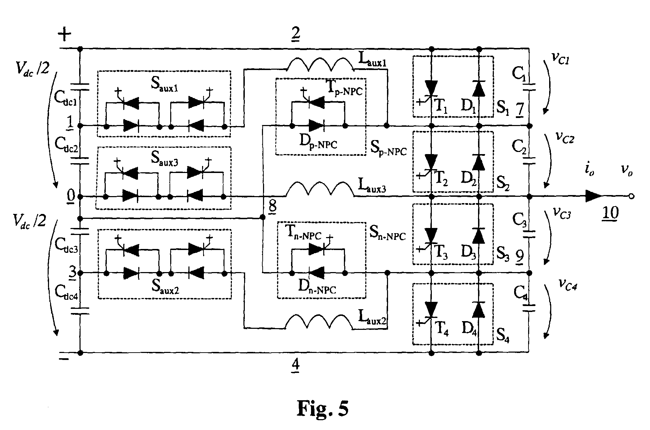

Die Ausführungsform gemäß Fig. 5 unterscheidet sich gegenüber der Ausführungsform in Fig. 4 durch eine Reihenschaltung von Hilfsschaltern $S_{aux1}$ bis $S_{aux3}$ und den entsprechenden Resonanz-Induktivitäten $L_{aux1}$ bis $L_{aux3}$ sowie deren Ankopplung in der Stromrichterphase an die Verbindungspunkte 7, 10 und 9. Vorteilhaft in dieser Anordnung ist, daß die Hilfsschalter $S_{aux1}$ und $S_{aux2}$ mit einer maximalen Sperrspannung von $V_{dc}/4$ belastet werden.

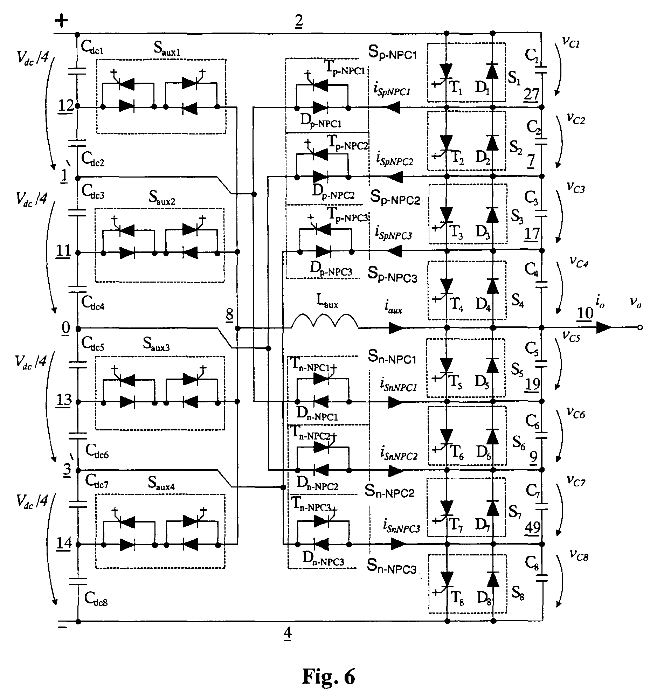

Fig. 6 zeigt eine Erweiterung der Ausführungsform gemäß Fig. 1 auf einen verlustarm schaltenden ARCP Mehrpunktstromrichter mit mehr als drei Punkten, wobei in jeder Stromrichterebene durch eine Serienschaltung von zwei Kapazitäten $C_{dc1}...C_{dc8}$ dafür gesorgt wird, daß ein Spannungsmittelpunkt bezüglich der jeweiligen Stromrichterebene zur Verfügung steht, wobei der Ausgang der Stromrichterphase 10 durch eine Reihenschaltung von mindestens einer Resonanz-Induktivität $L_{aux}$ und unabhängig steuerbarer bidirektionaler Hilfsschalter $S_{aux1}...S_{aux4}$ mit den Spannungsmittelpunkten in jeder Stromrichterebene verbunden ist, wobei parallel zu jedem einzelnen Hauptschalter $S_1...S_8$ eine einzelne Entlastungskapazität $C_1...C_8$ angeordnet ist und wobei eine Steuerung der Ladung der Entlastungskapazitäten über den Hauptschaltern durch zusätzliche Ladungssteuerungsschalter $S_{p-NPC1}$, $S_{p-NPC2}$, $S_{p-NPC3}$, $S_{n-NPC1}$, $S_{n-NPC2}$, $S_{n-NPC3}$ erfolgt, die antiparallel zu den Entkopplungsdioden des Mehrpunktstromrichters geschalten sind. Im konkreten Fall ist ein ARCP Fünfpunktstromrichter dargestellt.

Im einzelnen besteht die Ausgangsphase des Fünfpunktstromrichters aus einer Reihenschaltung der Hauptschalter $S_1$ bis $S_8$, die elektrisch parallel zu einem Gleichspannungszwischenkreis geschalten sind, welcher aus einer Reihenschaltung der gleich großen Kapazitäten $C_{dc1}$ bis $C_{dc8}$ besteht und damit die positive Gleichspannungsschiene 2 mit der negativen Gleichspannungsschiene 4 verbindet. Während der Verbindungspunkt 0 der Kapazitäten $C_{dc4}$ und $C_{dc5}$ als Stromrichtermittelpunkt bezeichnet wird, repräsentieren die Verbindungspunkte 1' und 3' die Spannungsmittelpunkte bezüglich der oberen und unteren Stromrichterhälfte und damit die Verbindungspunkte zwischen den Stromrichterebenen. Die obere und untere Stromrichterhälfte wird im Fünfpunktstromrichter noch einmal in jeweils zwei Stromrichterebenen unterteilt, so daß insgesamt vier Stromrichterebenen existieren.

Die Schalter $S_1$ bis $S_8$ bestehen jeweils aus einem aktiv ausschaltbaren Leistungshalbleiter $T_1$, $T_2$... mit antiparallel geschalteter Diode $D_1$, $D_2$.... Der Stromrichtermittelpunkt 0 ist mit dem Verbindungspunkt 7 der Hauptschalter $S_2$ und $S_3$ durch die Entkopplungsdiode $D_{p-NPC2}$ sowie mit dem Verbindungspunkt 9 der Hauptschalter $S_6$ und $S_7$ durch die Entkopplungsdiode $D_{n-NPC2}$ verbunden. Der Spannungsmittelpunkt 1' der oberen Stromrichterhälfte ist mit dem Verbindungspunkt 27 der Hauptschalter $S_1$ und $S_2$ durch die Entkopplungsdiode $D_{p-NPC1}$ sowie mit dem Verbindungspunkt 19 der Hauptschalter $S_5$ und $S_6$ durch die Entkopplungsdiode $D_{n-NPC1}$ verbunden. Der Spannungsmittelpunkt 3' der unteren Stromrichterhälfte ist mit dem Verbindungspunkt 17 der Hauptschalter $S_3$ und $S_4$ durch die Entkopplungsdiode $D_{p-NPC3}$ sowie mit dem Verbindungspunkt 49 der Hauptschalter $S_7$ und $S_8$ durch die Entkopplungsdiode $D_{n-NPC3}$ verbunden.

Direkt parallel zu den Hauptschaltern $S_1$ bis $S_8$ sind die Entlastungskapazitäten $C_1$ bis $C_8$ geschalten. Die Ladungssteuerungsschalter bestehen jeweils aus einem aktiv ausschaltbaren Leistungshalbleiter $T_{p-NPC1}$..., $T_{n-NPC1}$..., die antiparallel zu jeder Entkopplungsdiode geschalten werden.

Zusätzlich sind die Spannungsmittelpunkte 11, 12, 13 und 14 aller Stromrichterebenen jeweils über die Hilfsschalter $S_{aux1}$ bis $S_{aux4}$ mit einer Resonanz-Induktivität $L_{aux}$ verbunden — siehe Verbindungspunkt 8. Die andere Seite der Resonanz-Induktivität $L_{aux}$ ist am Ausgang 10 der Stromrichterphase angeschlossen. Die Hilfsschalter bestehen aus einer Serienschaltung von zwei aktiv ausschaltbaren Leistungshalbleitern mit antiparallelen Dioden, die so miteinander verschalten sind, daß ein bidirektionaler Schalter entsteht.

Ähnlich wie in der Ausführung gemäß Fig. 3 kann auch in dem Fünfpunktstromrichter jeder bidirektionale Hilfsschalter mit einer separaten Resonanz-Induktivität verbunden werden. Die Sperrspannungsbelastung der Hilfsschalter kann somit auf maximal $3/8 V_{dc}$ begrenzt werden, wenn die Hilfsschalter nicht am Punkt 8 mit einer Resonanz-Induktivität verbunden werden, sondern jeweils die Punkte 12 und 27, 11 und 17, 13 und 19 bzw. 14 und 49 mit einer Serienschaltung, bestehend aus einer Resonanz-Induktivität und eines bidirektionalen Hilfsschalters verbunden werden.

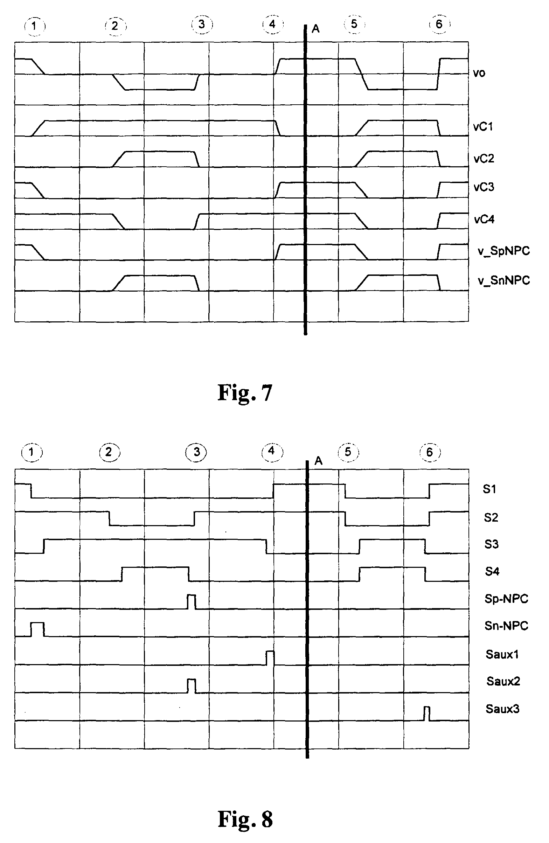

Fig. 7 stellt die Spannungen über den Entlastungskapazitäten $v_{C1}$ bis $v_{C4}$, und damit die Spannungen über den Hauptschaltern $S_1$ bis $S_4$, die Stromrichterausgangsspannung $v_o$ und die Spannung über den Ladungssteuerungsschaltern $v_{SpNPC}$ und $v_{SnNPC}$ für alle möglichen Kommutierungen in den Stromrichtertopologien der Fig. 1 bis 3 links von der Markierung A dar. Unter Annahme eines positiven Laststromes $i_o$ ist eine volle Schaltsequenz von der maximalen positiven Ausgangsspannung $v_o$ über die maximale negative Ausgangsspannung $v_o$ und zurück dargestellt. Die ersten beiden Kommutierungen ①② sind kapazitive Kommutierungen. Die Ausgangsspannung $v_o$ wird mittels zweier ARCP Kommutierungen ③④ wieder auf die maximale positive Ausgangsspannung zurückgeschwungen. Für die Stromrichter nach Fig. 4 und 5 sind alle in Fig. 7 dargestellten Kommutierungen möglich. Die beiden letzten Kommutierungen ⑤⑥ sind direkte Transitionen von der maximalen positiven zur maximalen negativen Ausgangsspannung, wobei die erstere wieder eine kapazitive Kommutierung ⑤ und die letztere eine ARCP Kommutierung ⑥ ist. Der Maßstab einer Teilung der Ordinate entspricht der Größe der Gleichspannung $V_{dc}$ im Gleichspannungszwischenkreis. Da die Spannung über den Entlastungskapazitäten den Spannungen über den Hauptschaltern entspricht, kann daraus die Sperrspannungsbelastung aller Hauptschalter zu $V_{dc}/2$ bestimmt werden. Die Kommutierungszeiten sind stark von den gewählten Schaltungsparametern abhängig. Alle Verläufe werden im weiteren im Detail beschrieben.

Fig. 8 zeigt die Logikzustände aller Schalter in einer Stromrichterphase des ARCP Dreipunktstromrichters mit Ladungssteuerungsschaltern korrespondierend zu den Kommutierungen dargestellt in Fig. 7. Auch hier sind die Kommutierungen rechts von der Markierung A nur von den erweiterten Topologien gemäß Fig. 4 oder Fig. 5 durchführbar. Alle Hilfsschalter sind nur während Kommutierungen eingeschalten und beeinflussen den stationären Betrieb des Stromrichters nicht.

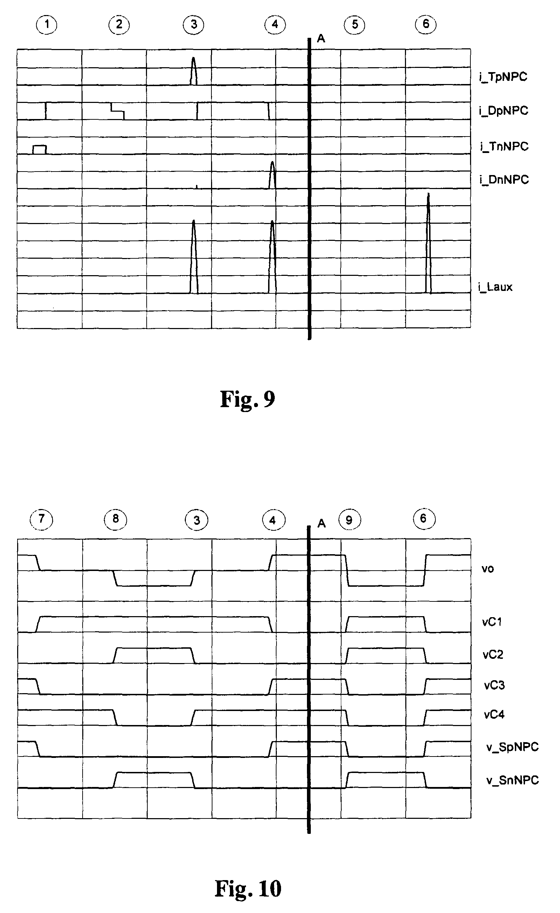

Fig. 9 gibt qualitativ die Stromverläufe durch die Ladungssteuerungsschalter, jeweils bestehend aus aktiven Schalter $T_{x-NPC}$ ( x = p bzw. n ) und Entkopplungsdiode $D_{x-NPC}$, und durch die Resonanz-Induktivität $L_{aux}$ wieder. Eine Ordinatenteilung entspricht der Größe des Ausgangsstrom $i_o$. Die Entkopplungsdioden $D_{p-NPC}$ und $D_{n-NPC}$ werden wie im hart schaltenden Stromrichter auch im stationären Zustand „0" mit dem Ausgangsstrom $i_o$ belastet, wobei die Ausgangsstromrichtung entscheidet, ob die positive oder negative Entkopplungsdiode leitet. Zusätzlich werden die Entkopplungsdioden bzw. die Ladungssteuerungsschalter mit dem Resonanzstrom bei der ARCP Kommutierung bzw. einem Teil des Umladestromes bei der kapazitiven Kommutierung belastet. Der Kommutierungsablauf korrespondiert zu den Beschreibungen für Fig. 7 und Fig. 8.

Fig. 10 entspricht Fig. 7, zeigt jedoch qualitativ den Verlauf der Spannung über den Entlastungskapazitäten und den Ladungssteuerungsschaltern für eine Schaltsequenz mit ARCP unterstützter kapazitiver Kommutierung für einen ARCP Dreipunktstromrichter mit Ladungssteuerungsschaltern. Für Stromrichter nach Fig. 1 bis Fig. 3 sind alle links von der Markierung A gezeigten Kommutierungen möglich. Die Ordinatenteilung entspricht der Teilung in Fig. 7. Auch hier sind für alle Schalter Nenn-Sperrspannungen von $V_{dc}/2$ erforderlich. Die ersten beiden Kommutierungen ⑧ sind in diesem Fall ARCP unterstützte kapazitive Kommutierungen. Die Kondensatoren werden nicht linear wie in Fig. 7, sondern mit Hilfe einer resonanten Schwingung umgeladen. Die darauffolgenden zwei ARCP Kommutierungen entsprechen qualitativ den ARCP Kommutierungen ③④ in Fig. 7. Für die Stromrichter nach Fig. 4 und 5 sind alle in Fig. 10 dargestellten Kommutierungen möglich. Die beiden letzten Kommutierungen ⑨⑥ sind direkte Transitionen von der maximalen positiven zur maximalen negativen Ausgangsspannung $v_o$, wobei die erstere eine ARCP unterstützte kapazitive Kommutierung ⑨ und die letztere eine ARCP Kommutierung ⑥ ist. Auch die Kommutierungszeiten für die ARCP unterstützten kapazitiven Kommutierungen sind stark von den gewählten Schaltungsparametern abhängig.

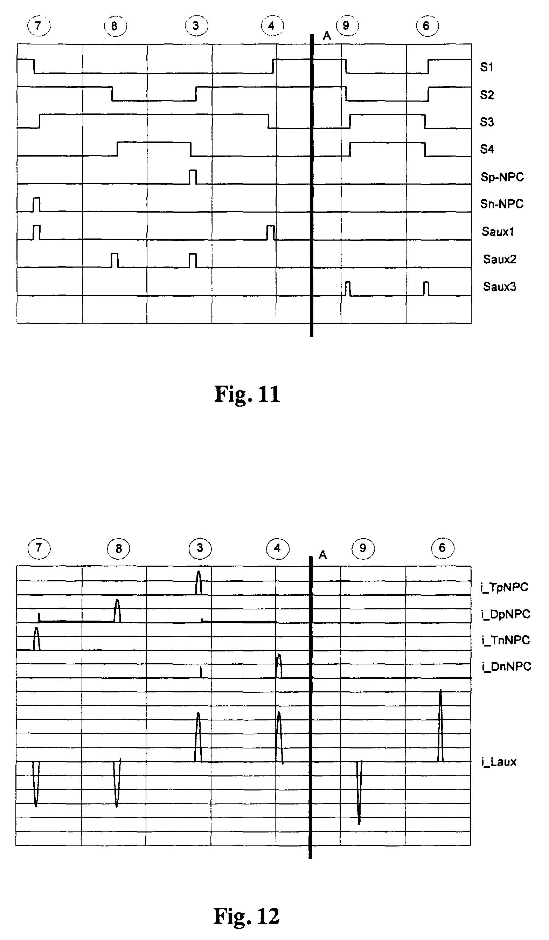

Fig. 11 entspricht der Fig. 8 und zeigt die Ansteuerlogik für alle Schalter für die für Fig. 10 diskutierten Kommutierungen. Auch hier werden die Hilfsschalter $S_{aux}$ und die Ladungssteuerungsschalter nur zu den Kommutierungen aktiviert.

Fig. 12 zeigt qualitativ den Verlauf der Ströme in den Ladungssteuerungsschaltern und den Entkopplungsdioden, sowie der resonanten Induktivität $L_{aux}$ für die für Fig. 10 diskutierten Kommutierungen. Der Ordinatenmaßstab wurde aus Fig. 9 übernommen, obwohl der Lasistrom $i_o$ in dieser Darstellung nur etwa 10% des Laststromes in Fig. 9 entspricht. Alle dargestellten Stromverläufe sind im weiteren beschrieben. Bezüglich der Strombelastung der Entkopplungsdioden treffen die für Fig. 9 gemachten Aussagen zu.

Im folgenden soll nun die Funktionsweise der Stromrichterphase gemäß Fig. 1 dieses erfindungsgemäßen, verlustarmen ARCP Dreipunktstromrichters mit Ladungssteuerungsschaltern anhand der Kommutierungsvorgänge von den oberen Hauptschaltern $S_1$ und $S_2$ auf die unteren Hauptschalter $S_3$ und $S_4$ sowie zurück beschrieben werden. Für den Betrieb eines beliebigen Dreipunktstromrichters sind die in der nachstehenden Tabelle 2 gezeigten Schaltzustände maßgebend, um die gewünschten Ausgangsspannungen $v_o$ bezüglich des Stromrichtermittelpunktes 0 (siehe Spalte 2) zu erzielen.

Tabelle 2

| Schaltzustände eines Dreipunktstromrichters | | | | | |
|---|---|---|---|---|---|
| Identifikation | Ausgangsspannung | $S_1$ | $S_2$ | $S_3$ | $S_4$ |
| p | $+V_{dc}/2$ | 1 | 1 | 0 | 0 |
| 0 | 0 | 0 | 1 | 1 | 0 |
| n | $-V_{dc}/2$ | 0 | 0 | 1 | 1 |

Eine detaillierte Beschreibung der einzelnen Schalttransitionen ist im folgenden für einen positiven Ausgangsstrom $i_o$ gegeben. Die Kommutierungen p→0 und 0→n sind in diesem Fall kapazitive Kommutierungen bzw. ARCP unterstützte kapazitive Kommutierungen und die Kommutierungen n→0 und 0→p sind ARCP Kommutierungen.

Bei relativ kleinem Ausgangsstrom, relativ großen Entlastungskapazitäten bzw. relativ großer Gleichspannung kann es zu ungewollt langen Kommutierungszeiten für die kapazitive Kommutierung kommen. Um die Kommutierungsdauer für die kapazitive Kommutierung zu verkürzen, kann man den ARCP Hilfszweig zur Beschleunigung der Kommutierung nutzen, was zu einer ARCP unterstützten kapazitiven Kommutierung führt.

Nachfolgend wird eine Kommutierung p→0 für $i_o>0$ behandelt:

a) Kapazitive Kommutierung (siehe Bildmarkierung ①):

Vor Beginn der Kommutierung sind die Hauptschalter $S_1$ und $S_2$ geschlossen. Der Ausgangsstrom $i_o$ fließt durch die Leistungshalbleiter (Schalter) $T_1$ und $T_2$. Die Spannung über den Schaltern $S_3$ und $S_4$ ist jeweils $v_{C3}=v_{C4}=V_{dc}/2$. Die Inversdioden $D_3$ und $D_4$ sind damit im Sperrzustand.

Der Leistungshalbleiter (Schalter) $T_{n-NPC}$ muß vor dem Start der kapazitiven Kommutierung aktiv eingeschalten werden, um während der Kommutierung eine korrekte Umladung der Entlastungskapazitäten $C_1$ und $C_3$ parallel zu den an der Kommutierung beteiligten Hauptschaltern $S_1$ und $S_3$ zu gewährleisten. Da die Spannung über dem Kondensator $C_4$ gleich $v_{C4}=V_{dc}/2$ ist, wird der Leistungshalbleiter (Schalter) $T_{n-NPC}$ unter $v_{SnNPC}=0$ und damit ZVS Bedingungen eingeschalten. Da der Schalter $T_3$ noch ausgeschalten und die Inversdiode $D_3$ noch im Sperrzustand ist, fließt durch den Schalter $S_{n-NPC}$ kein Strom.

Die Kommutierung beginnt, wenn der Schalter $T_1$ aktiv ausgeschalten wird. Der Laststrom $i_o$ kommutiert jeweils zur Hälfte in die Entlastungskapazitäten $C_1$ und $C_3$, die umgeladen werden. Dabei sinkt die Spannung in $C_3$ linear ab, während sie in $C_1$ linear ansteigt. Wie in Fig. 9 erkennbar, trägt der Schalter $T_{n-NPC}$ nun die Hälfte des Laststromes $i_{SnNPC}=i_o/2$. Die andere Hälfte fließt über die positive Gleichspannungsschiene 2. Die Spannung über dem Kondensator $C_4$ bleibt wegen dem eingeschalteten Schalter $T_{n-NPC}$ konstant bei $v_{C4}=V_{dc}/2$.

Die Kommutierung der Hauptschalter ist beendet, wenn die Spannung über dem Kondensator $C_3$ den Wert $v_{C3}=0$ erreicht hat und der Schalter $S_3$ mit der Diode $D_3$ unter ZVS Bedingung einschaltet. Jeweils die Hälfte des Laststromes wird nun von den Serienschaltungen $T_{n-NPC}/D_3$ und $T_2/D_{p-NPC}$ getragen. Hier kann einer der beiden parallelen Zweige — der mit dem Schalter $S_{n-NPC}$ — verlustarm, da bei $v_{SnNPC}=0$, ausgeschalten werden, was zu einem Transfer des Laststromes $i_o$ komplett zur positiven Entkopplungsdiode $D_{p-NPC}$ führt (siehe Fig. 9). Damit ist die Kommutierung abgeschlossen und der "0" Zustand erreicht. Die Schalter $S_2$ und $S_3$ sind eingeschalten und die Spannungen $v_{C1}$ und $v_{C4}$ betragen jeweils $V_{dc}/2$. Die Hilfsschalter $S_{aux1}$ und $S_{aux2}$ werden für diese Kommutierung nicht aktiviert.

b) ARCP unterstützte kapazitive Kommutierung (siehe Bildmarkierung ⑦):

Vor Beginn der Kommutierung sind die Schalter $S_1$ und $S_2$ geschlossen. Der Laststrom $i_o$ fließt durch die Schalter $T_1$ und $T_2$. Die Spannung über den Schaltern $S_3$ und $S_4$ ist jeweils $v_{C3}=v_{C4}=V_{dc}/2$. Die Inversdioden $D_3$ und $D_4$ sind im Sperrzustand.

Bevor die Kommutierung gestartet werden kann, muß der Schalter $T_{n-NPC}$ eingeschalten werden, um während der Kommutierung ein korrektes Umladen der Entlastungskapazitäten $C_1$ und $C_3$ parallel zu den an der Kommutierung beteiligten Hauptschaltern $S_1$ und $S_3$ zu gewährleisten. Da die Spannung über der Kapazität $C_4$ gleich $v_{C4}=V_{dc}/2$ ist, wird der Schalter $T_{n-NPC}$ bei $v_{SnNPC}=0$ und damit unter ZVS Bedingungen eingeschalten. Durch diesen Schalter fließt jedoch noch kein Strom, da $T_3$ ausgeschalten ist und die Inversdiode $D_3$ wegen der Sperrspannung von $V_{dc}/2$ blockiert ist. Der Kommutierungsvorgang wird mit dem Einschalten von $S_{aux1}$ bei $i_{aux}=0$ (ZCS) gestartet. Wegen der nun negativen Spannung über der Induktivität $L_{aux}$, $v_{Laux}=-V_{dc}/4$ kommt es zu einem negativen Stromanstieg $i_{aux}$ im Hilfszweig. Wenn der Strom in $T_1$ bzw. $T_2$, bestehend aus der Überlagerung des Laststromes $i_o$ mit dem Strom $i_{aux}$, einen bestimmten frei wählbaren Wert erreicht hat, wird die Kommutierung der Hauptschalter durch aktives Ausschalten von $T_1$ gestartet. Die Stromstärke, bei der das Abschalten erfolgt, wird so gewählt, daß die Kommutierungsdauer innerhalb der gewünschten maximalen Kommutierungsdauer liegt.

Nach dem Ausschalten von $T_1$ kommutiert der Umladestrom, bestehend aus einer Überlagerung von dem Laststrom $i_o$ und dem Strom $i_{aux}$, in die Entlastungskapazitäten (Kondensatoren) $C_1$ und $C_3$ und lädt diese um. Dabei wird der Kondensator $C_1$ nichtlinear geladen, während der Kondensator $C_3$ dementsprechend entladen wird. Der Schalter $T_{n-NPC}$ trägt nun die Hälfte dieses Umladestromes (siehe Fig. 12). Die andere Hälfte wird über die positive Gleichspannungsschiene 2 geführt. Die Spannung über der Kapazität $C_4$ wird dabei durch den geschlossenen Schalter $S_{n-NPC}$ konstant bei $v_{C4}=V_{dc}/2$ gehalten.

Die Kommutierung der Hauptschalter ist beendet, wenn die Spannung über $C_3$ den Wert $v_{C3}=0$ erreicht hat und der Schalter $S_3$ unter ZVS Bedingungen eingeschalten wird. Der Laststrom $i_o$ mit dem überlagerten Strom $i_{aux}$, der während der Kommutierung jeweils zur Hälfte von der positiven Gleichspannungsschiene 2 und der Serienschaltung $T_{n-NPC}$ und $D_3$ getragen wurde, kommutiert mit dem Einschalten von $S_3$ von der positiven Gleichspannungsschiene 2 auf die Serienschaltung $S_2$ und $D_{p-NPC}$. Wie auch in Fig. 12 zu erkennen ist, wird nun der Laststrom $i_o$ mit dem überlagerten Strom $i_{aux}$ zur Hälfte von der Serienschaltung von $T_{n-NPC}$ und $D_3$ getragen, während die andere Hälfte von $S_2$ und der positiven Entkopplungsdiode $D_{p-NPC}$ getragen wird. Eine positive Spannung von $v_{Laux}=V_{dc}/4$ liegt jetzt über der Induktivität $L_{aux}$ im Hilfszweig, was zu einem positiven Stromgradienten in $i_{aux}$ führt. Wenn der Strom $i_{aux}$ den Wert $i_{aux}=0$ erreicht hat, kann der Schalter $S_{aux1}$ unter ZCS Bedingung ausgeschalten werden. Damit fließt jetzt ein Strom in Höhe des Laststromes $i_o$ durch die parallelen Zweige $T_{n-NPC}/D_3$ und $S_2/D_{p-NPC}$. Abschließend kann nun einer der beiden parallelen Zweige — der Zweig mit dem Schalter $S_{n-NPC}$ — verlustarm, da bei $v_{SnNPC}=0$, ausgeschalten werden, was den Laststrom $i_o$ komplett auf die positive Entkopplungsdiode $D_{p-NPC}$ kommutieren läßt (siehe Fig. 12). Damit ist die gesamte Kommutierung beendet und der Stromrichterzweig hat den Zustand "0" erreicht.

Nachfolgend wird eine Kommutierung 0→n für $i_o$>0 behandelt:

a) Kapazitive Kommutierung (siehe Bildmarkierung ②):

Vor Beginn der Kommutierung sind die Schalter $S_2$ und $S_3$ geschlossen. Der Laststrom $i_o$ fließt durch $T_2$ und die positive Entkopplungsdiode $D_{p\text{-}NPC}$. Die Spannung über den Schaltern $S_1$ und $S_4$ ist jeweils $v_{C1}=v_{C4}=V_{dc}/2$. Die Inversdioden $D_1$ und $D_4$ sind damit gesperrt.
Die Kommutierung wird initiiert, indem der Schalter $T_2$ aktiv ausgeschalten wird. Da der Schalter $S_3$ eingeschalten ist, kommutiert der Laststrom $i_o$ jeweils zur Hälfte in die Kondensatoren $C_2$ und $C_4$, wobei diese umgeladen werden. Dabei steigt die Spannung am Kondensator $C_2$ linear an, während die Spannung am Kondensator $C_4$ linear fällt. Ein Umladen des Kondensators $C_1$ wird anforderungsgemäß durch die Entkopplungsdiode $D_{p\text{-}NPC}$, die einen Pfad für den Umladestrom des Kondensators $C_2$ bereitstellt, verhindert. Damit bleiben die Spannungen über $C_1$ und $C_3$ jeweils bei $v_{C1}=V_{dc}/2$ und $v_{C3}=0$. Die positive Entkopplungsdiode $D_{p\text{-}NPC}$ und die negative Gleichspannungsschiene 4 tragen nun jeweils die Hälfte des Laststromes $i_o$ (siehe Fig. 9). Die Kommutierung ist beendet, wenn die Spannung über $C_4$ den Wert $v_{C4}=0$ erreicht hat und der Schalter $S_4$ unter ZVS Bedingung eingeschalten wird. Der Laststrom $i_o$, der während der Kommutierung jeweils zur Hälfte von der Serienschaltung $S_2$ und positive Entkopplungsdiode $D_{p\text{-}NPC}$ bzw. von der negativen Gleichspannungsschiene 4 getragen wurde, kommutiert nun komplett auf die Inversdioden $D_3$ und $D_4$. Damit ist die Kommutierung beendet und der "n" Zustand mit einer Ausgangsspannung von $v_o=-V_{dc}/2$ wurde erreicht. Für diese Kommutierung ist ein aktives Einschalten des Schalters $T_{p\text{-}NPC}$ zur Ladungssteuerung nicht erforderlich, da die positive Entkopplungsdiode $D_{p\text{-}NPC}$ einen Strompfad für die Umladung des Kondensators $C_2$ bereitstellt. Die Hilfsschalter $S_{aux1}$ und $S_{aux2}$ werden für diese Kommutierung nicht aktiviert.

b) ARCP unterstützte kapazitive Kommutierung (siehe Bildmarkierung ⑧):

Vor Beginn der Kommutierung sind die Schalter $S_2$ und $S_3$ geschlossen. Der Laststrom $i_o$ fließt durch $T_2$ und die positive Entkopplungsdiode $D_{p\text{-}NPC}$. Die Spannung über den Schaltern $S_1$ und $S_4$ ist jeweils $v_{C1}=v_{C4}=V_{dc}/2$. Damit sind die Inversdioden $D_1$ und $D_4$ im Sperrzustand.
Die Kommutierung wird mit dem Einschalten des Hilfsschalters $S_{aux2}$ bei $i_{aux}=0$ (ZCS) gestartet. Wegen der damit verbundenen negativen Spannung über der Induktivität $L_{aux}$, $v_{Laux}=-V_{dc}/4$, kommt es zu einem negativen Stromanstieg $i_{aux}$ im Hilfszweig.
Wenn der Strom in $T_2$, bestehend aus der Überlagerung von $i_o$ und $i_{aux}$, einen bestimmten frei wählbaren Wert erreicht hat, wird die Kommutierung der Hauptschalter durch aktives Ausschalten von $T_2$ gestartet. Die Stromstärke, bei der das Abschalten erfolgt, wird so gewählt, daß die Kommutierungsdauer innerhalb der gewünschten maximalen Kommutierungsdauer liegt.
Da $S_3$ eingeschalten bleibt, kommutiert der Laststrom $i_o$ mit dem überlagerten Strom $i_{aux}$ nach dem Ausschalten von $T_2$ in die Kondensatoren $C_2$ und $C_4$ und lädt diese um. Dabei steigt die Spannung am Kondensator $C_2$ nichtlinear an, während die Spannung am Kondensator $C_4$ entsprechend fällt. Die positive Entkopplungsdiode $D_{p\text{-}NPC}$, die in dieser Kommutierung einen Pfad für den Umladestrom des Kondensators $C_2$ stellt (siehe Fig. 12) und damit ein Umladen von $C_1$ anforderungsgemäß verhindert, und die negative Gleichspannungsschiene 4 tragen nun jeweils die Hälfte des Laststromes $i_o$ mit dem überlagerten Strom $i_{aux}$. Die Spannungen über den Kondensatoren $C_1$ und $C_3$ bleiben damit jeweils konstant bei $v_{C1}=V_{dc}/2$ und $v_{C3}=0$ (siehe Fig. 10). Wegen der Steuerung der Ladungsverteilung der Entlastungskapazitäten mit der positiven Entkopplungsdiode $D_{p\text{-}NPC}$ ist für diese Kommutierung das aktive Einschalten des Schalters $S_{p\text{-}NPC}$ mittels $T_{p\text{-}NPC}$ nicht erforderlich.
Die Kommutierung der Hauptschalter ist beendet, wenn die Spannung über dem Kondensator $C_4$ den Wert $v_{C4}=0$ erreicht hat und der Schalter $S_4$ unter ZVS Bedingungen eingeschalten wurde. Der Umladestrom, bestehend aus Laststrom $i_o$ und Strom $i_{aux}$, kommutiert nun von der positiven Entlastungsdiode $D_{p\text{-}NPC}$, die während der Kommutierung die Hälfte dieses Umladestromes getragen hat, komplett auf die Inversdioden in $S_3$ und $S_4$. Eine positive Spannung von $v_{Laux}=V_{dc}/4$ liegt jetzt über der Induktivität $L_{aux}$ im Hilfszweig, die zu einem positiven Stromgradienten in $i_{aux}$ führt.
Wenn der Strom $i_{aux}$ den Wert $i_{aux}=0$ erreicht hat, kann der Schalter $S_{aux2}$ unter ZCS Bedingung ausgeschalten werden. Damit ist die gesamte Kommutierung beendet und der Stromrichterzweig hat den Zustand "n" erreicht.

Nachfolgend wird eine Kommutierung n→0 für $i_o$>0 behandelt:

ARCP Kommutierung (siehe Bildmarkierung ③):

Vor Beginn der Kommutierung sind die Schalter $S_3$ und $S_4$ eingeschalten. Der Laststrom $i_o$ fließt durch die Inversdioden $D_3$ und $D_4$. Die Spannung über den Schaltern $S_1$ und $S_2$ ist jeweils $v_{C1}=v_{C2}=V_{dc}/2$. Die Inversdioden $D_1$ und $D_2$ sind damit im Sperrzustand.

Bevor die Kommutierung gestartet werden kann, muß der Schalter $T_{p-NPC}$ aktiv eingeschaltet werden, um während der Kommutierung eine korrekte Umladung der Entlastungskapazitäten der an der Kommutierung beteiligten Hauptschalter $S_2$ und $S_4$ zu gewährleisten. Da die Spannung über dem Kondensator $C_1$ gleich $v_{C1}=V_{dc}/2$ ist, wird der Schalter $T_{p-NPC}$ unter ZVS Bedingungen bei $v_{SpNPC}=0$ geschlossen. Es fließt noch kein Strom durch diesen Schalter, da der Schalter $T_2$ noch ausgeschalten ist und die Inversdiode $D_2$ wegen $v_{C2}=V_{dc}/2$ im Sperrzustand ist.

Die Kommutierung wird mit dem Einschalten des Hilfsschalters $S_{aux2}$ bei $i_{aux}=0$ (ZCS) gestartet. Wegen der positiven Spannung über der Induktivität $L_{aux}$, $v_{Laux}=V_{dc}/4$, kommt es zu einem positiven Stromanstieg $i_{aux}$ im Hilfszweig. Wenn dieser Strom $i_{aux}$ einen bestimmten Wert $I_{boost}>0$ mit $I_{boost}=i_{aux}-i_o$ erreicht wird die Kommutierung durch aktives Ausschalten von $T_4$ gestartet. Dieser Wert des Booststromes $I_{boost}$ ist frei wählbar, muß aber einen Mindestwert besitzen, der ein vollständiges Umschwingen der Spannung über dem Kondensator $C_2$ auf den Wert $v_{C2}=0$ auch bei einem verlustbehafteten, nicht idealen Aufbau garantiert. Da der Schalter $S_3$ eingeschalten ist, kommutiert die Differenz des Laststromes $i_o$ und des Hilfsstromes $i_{aux}$ in die Kondensatoren $C_4$ und $C_2$, was ein Entladen des Kondensators $C_2$ und ein Laden des Kondensators $C_4$ bewirkt. Der Schalter $T_{p-NPC}$ trägt nun die Hälfte dieses resonanten Stromes, während die andere Hälfte von der negativen Gleichspannungsschiene 4 getragen wird (siehe Fig. 9). Da der Umladestrom des Kondensators $C_2$ von dem Ladungssteuerungsschalter $S_{p-NPC}$ getragen wird, bleibt die Spannung über $C_1$ konstant bei $v_{C1}=V_{dc}/2$ (siehe Fig. 6).

Wenn die Spannung des Kondensators $C_2$ den Wert $v_{C2}=0$ erreicht hat, wird der Schalter $S_2$ unter ZVS Bedingung eingeschaltet. Damit werden die Kondensatorspannungen von $C_2$ und $C_4$ nun auf $v_{C2}=0$ bzw. $v_{C4}=V_{dc}/2$ gehalten (siehe Fig. 10) und die eine Hälfte des Umladestromes, bestehend aus der Differenz von Laststrom $i_o$ und Strom $i_{aux}$, die von der negativen Gleichspannungsschiene getragen wurde, kommutiert nun kurzzeitig auf die negative Entkopplungsdiode $D_{n-NPC}$, während die andere Hälfte weiterhin durch den Schalter $S_2$ und den positiven Ladungssteuerungsschalter $S_{p-NPC}$ fließt (siehe Fig. 9 bzw. Fig. 12). Eine negative Spannung von $v_{Laux}=-V_{dc}/4$ liegt jetzt über der Induktivität $L_{aux}$ im Hilfszweig, die zu einem negativen Stromgradienten in $i_{aux}$ führt. Wenn der Strom $i_{aux}$ den Wert $i_{aux}=0$ erreicht hat, kann der Schalter $S_{aux2}$ unter ZCS Bedingung ausgeschalten werden. Abschließend kann der Schalter $T_{p-NPC}$ unter ZVS Bedingung ausgeschalten werden, da die positive Entkopplungsdiode $D_{p-NPC}$ inzwischen den gesamten Laststrom $i_o$ von der negativen Entkopplungsdiode $D_{n-NPC}$ und dem Schalter $T_{p-NPC}$ übernommen hat. Damit ist die Kommutierung beendet und der Stromrichterzweig hat den Zustand "0" erreicht.

Nachfolgend wird eine Kommutierung $0 \rightarrow p$ für $i_o>0$ behandelt:

ARCP Kommutierung (siehe Bildmarkierung ④):

Vor Beginn der Kommutierung sind die Schalter $S_2$ und $S_3$ geschlossen. Der Laststrom $i_o$ fließt durch $T_2$ und die positive Entkopplungsdiode $D_{p-NPC}$. Die Spannung über den Schaltern $S_1$ und $S_4$ ist jeweils $v_{C1}=v_{C4}=V_{dc}/2$. Damit sind die Inversdioden $D_1$ und $D_4$ im Sperrzustand.

Das Einschalten des Hilfsschalters $S_{aux1}$ bei $i_{aux}=0$ (ZCS) startet die Kommutierung. Wegen der positiven Spannung von $v_{Laux}=V_{dc}/4$ über der Hilfsinduktivität $L_{aux}$ ist ein positiver Stromanstieg bei dem Strom $i_{aux}$ zu verzeichnen. Wenn der Strom $i_{aux}$ einen Wert $I_{boost}>0$ mit $I_{boost}=i_{aux}-i_o$ erreicht hat, wird die Kommutierung durch aktives Ausschalten von $T_3$ gestartet. Der minimale Booststrom $I_{boost}$ wird wieder durch die Umschwingbedingung von $v_{C1}\leq0$ bestimmt. Da der Schalter $S_2$ eingeschalten ist, kommutiert die Differenz des Laststromes $i_o$ und des Stromes $i_{aux}$ in die Kondensatoren $C_1$ und $C_3$, was zu einem Laden des Kondensators $C_3$ und einem Entladen des Kondensators $C_1$ führt. Die negative Entkopplungsdiode $D_{n-NPC}$, die in diesem Fall einen Strompfad für die Umladung des Kondensators $C_3$ bei konstanter Spannung am Kondensator $C_4$ liefert, trägt die Hälfte dieses Umladestromes, während die andere Hälfte von der positiven Gleichspannungsschiene 2 getragen wird. Die Spannung über dem Kondensator $C_4$ bleibt damit konstant bei $v_{C4}=V_{dc}/2$.

Wenn die Spannung über $C_1$ den Wert $v_{C1}=0$ erreicht hat, wird der Schalter $S_1$ unter ZVS Bedingungen eingeschaltet. Damit werden die Spannungen der Kondensatoren $C_1$ und $C_3$ nun auf $v_{C1}=0$ bzw. $v_{C3}=V_{dc}/2$ (siehe Fig. 6) gehalten und der Stromfluß in Höhe der Hälfte des Umladestromes durch die negative Entkopplungsdiode $D_{n-NPC}$ unterbrochen (siehe Fig. 9), was eine Kommutierung des Umladestromes komplett auf die Schalter $S_1$ und $S_2$ zur Folge hat. Eine negative Spannung $v_{Laux}=-V_{dc}/4$ liegt nun über dem Hilfszweig, die zu einem negativen Gradienten im Strom $i_{aux}$ führt. Wenn der Strom $i_{aux}$ den Wert $i_{aux}=0$ erreicht hat, kann der Schalter $S_{aux1}$ unter ZCS Bedingungen ausgeschalten werden. Damit ist die Kommutierung beendet und der Stromrichterzweig hat den Zustand "p" erreicht. Für diese Kommutierung ist ein aktives Einschalten des negativen Ladungssteuerungsschalters $S_{n-NPC}$ nicht erforderlich, da die Entkopplungsdiode $D_{n-NPC}$ automatisch die korrekte Ladungssteuerung in den Entlastungskapazitäten vornimmt.

Die Kommutierungen für negative Ausgangsströme $i_o<0$ sind wegen der symmetrischen Struktur analog, jedoch sind jetzt die Transitionen $p \rightarrow 0$ und $0 \rightarrow n$ ARCP Kommutierungen und die Transitionen $n \rightarrow 0$ und $0 \rightarrow p$ kapazitive bzw. ARCP unterstützte kapazitive Kommutierungen.

Für die Entscheidung, welcher der Hilfsschalter $S_{aux}$ zur ARCP Kommutierung bzw. zur ARCP unterstützten kapazitiven Kommutierung aktiviert werden muß, ist die Stromrichtung des Ausgangsstromes $i_o$ nicht bedeutend. Für

ARCP Kommutierungen bzw. ARCP unterstützte kapazitive Kommutierungen von 0→p oder von p→0 ist immer der Schalter $S_{aux1}$ zu aktivieren. Analog sind die ARCP Kommutierungen bzw. ARCP unterstützten kapazitiven Kommutierungen in der unteren Stromrichterhälfte für 0→n bzw. von n→0 nur mit dem Hilfsschalter $S_{aux2}$ durchzuführen.

Die Stromrichtung beeinflußt jedoch, ob der aktive Schalter im Ladungssteuerungsschalter aktiviert werden muß oder nicht. Das Kriterium ist das Vorhandensein eines Strompfades für den Umladestrom der Entlastungskondensatoren, die über den Hauptschaltern liegen, die eine Schalttransition ausführen, der nicht über die Entlastungskondensatoren führen darf, die parallel zu Hauptschaltern liegen, die nicht an der Kommutierung beteiligt sind. In 50% der Kommutierungsfälle ist ein Strompfad von den im Dreipunktstromrichter vorhandenen Entkopplungsdioden $D_{p-NPC}$ und $D_{n-NPC}$ gegeben. Da ein aktives Einschalten der Ladungssteuerungsschalter mittels $T_{p-NPC}$ bzw. $T_{n-NPC}$ zwar wirkungslos, jedoch nicht falsch ist, kann das beschriebene Aktivierungskriterium unter Nichtbeachtung der Flußrichtung der Entkopplungsdioden als eine hinreichende Bedingung für den Betrieb des ARCP Stromrichters mit Ladungssteuerungsschaltern angesehen werden.

Im folgenden soll nun die erweiterte Betriebsweise des Stromrichters beschrieben werden, die aufgrund der in Fig. 4 und 5 gezeigten Anordnungen direkte Kommutierungen von p→n und n→p erlaubt. Für einen positiven Ausgangsstrom $i_o$>0 sind die Transitionen p→n kapazitive bzw. ARCP unterstützte kapazitive Kommutierungen, während die Transitionen n→p ARCP Kommutierungen sind. Die Hilfsschalter $S_{aux1}$ und $S_{aux2}$, sowie die Ladungssteuerungsschalter $S_{p-NPC}$ und $S_{n-NPC}$, werden für die nachfolgend beschriebenen Kommutierungen nicht benötigt.

Nachfolgend wird eine Kommutierung p→n für $i_o$>0 behandelt:

a) Kapazitive Kommutierung (siehe Bildmarkierung ⑤):

Vor Beginn der Kommutierung sind die Schalter $S_1$ und $S_2$ geschlossen. Der Ausgangsstrom $i_o$ fließt durch die Schalter $T_1$ und $T_2$. Die Spannung über den Schaltern $S_3$ und $S_4$ ist jeweils $v_{C3}=v_{C4}=V_{dc}/2$. Die Inversdioden $D_3$ und $D_4$ sind damit im Sperrzustand.

Die Kommutierung beginnt, wenn die Schalter $T_1$ und $T_2$ anforderungsgemäß gemeinsam aktiv ausgeschalten werden. Der Laststrom $i_o$ kommutiert in die Entlastungskapazitäten $C_1$, $C_2$, $C_3$ und $C_4$, wobei die Kondensatoren $C_1$ und $C_2$ linear geladen und die Kondensatoren $C_3$ und $C_4$ linear entladen werden. Die positive Gleichspannungsschiene 2 und die negative Gleichspannungsschiene 4 tragen dabei jeweils die Hälfte des Laststromes $i_o$.

Die Kommutierung ist beendet, wenn die Spannungen über den Kondensatoren $C_3$ und $C_4$ den Wert $v_{C3}=v_{C4}=0$ erreicht haben und die Schalter $D_3$ und $D_4$ unter ZVS Bedingung einschalten. Damit betragen die Spannungen $v_{C1}$ und $v_{C2}$ jeweils $V_{dc}/2$. Der Laststrom kommutiert komplett auf die Schalter $S_3$ und $S_4$. Damit ist die Kommutierung abgeschlossen und der "n" Zustand erreicht. Der Hilfsschalter $S_{aux3}$ wird in dieser Kommutierung nicht aktiviert.

b) ARCP unterstützte kapazitive Kommutierung (siehe Bildmarkierung ⑦):

Vor Beginn der Kommutierung sind die Schalter $S_1$ und $S_2$ geschlossen. Der Laststrom $i_o$ fließt durch die Schalter $T_1$ und $T_2$. Die Spannung über den Schaltern $S_3$ und $S_4$ ist jeweils $v_{C3}=v_{C4}=V_{dc}/2$. Die Inversdioden $D_3$ und $D_4$ sind im Sperrzustand.

Der Kommutierungsvorgang wird mit dem Einschalten von $S_{aux3}$ bei $i_{aux}=0$ (ZCS) gestartet. Wegen der negativen Spannung $v_{Laux}=-V_{dc}/2$ über der Induktivität $L_{aux}$ kommt es zu einem negativen Stromanstieg $i_{aux}$ im Hilfszweig. Wenn der Strom in $T_1$ bzw. $T_2$, bestehend aus dem Laststrom $i_o$ und dem überlagerten Strom $i_{aux}$, einen bestimmten frei wählbaren Wert erreicht hat, wird die Kommutierung der Hauptschalter durch gemeinsames Ausschalten von $T_1$ und $T_2$ gestartet. Die Stromstärke, bei der das Abschatten erfolgt, wird so gewählt, daß die Kommutierungsdauer innerhalb der gewünschten maximalen Kommutierungsdauer liegt.

Nach dem Ausschalten der beiden Hauptschalter $T_1$ und $T_2$ kommutiert der Laststrom $i_o$ mit dem überlagerten Hilfsstrom $i_{aux}$ jeweils zur Hälfte in die Entlastungskondensatoren $C_1$ und $C_2$, bzw. $C_3$ und $C_4$. Dabei werden die Kondensatoren $C_1$ und $C_2$ nichtlinear geladen, während die Kondensatoren $C_3$ und $C_4$ dementsprechend entladen werden. Die Kommutierung der Hauptschalter ist beendet, wenn die Spannungen über den Kondensatoren $C_3$ und $C_4$ die Werte $v_{C3}=v_{C4}=0$ erreicht haben und die Schalter $S_3$ und $S_4$ unter ZVS Bedingungen eingeschalten werden. Der Laststrom kommutiert jetzt in die Schalter $S_3$ und $S_4$. Eine positive Spannung von $v_{Laux}=V_{dc}/2$ liegt damit über der Induktivität $L_{aux}$ im Hilfszweig, die zu einem positiven Stromgradienten im Strom $i_{aux}$ führt. Wenn der Strom $i_{aux}$ den Wert $i_{aux}=0$ erreicht hat, kann der Schalter $S_{aux3}$ unter ZCS Bedingung ausgeschalten werden. Damit ist die gesamte Kommutierung beendet und der Stromrichterzweig hat den Zustand "n" erreicht.

Nachfolgend wird eine Kommutierung n→p für $i_o$>0 behandelt:

ARCP Kommutierung (siehe Bildmarkierung ⑥):

Vor Beginn der Kommutierung sind die Schalter $S_3$ und $S_4$ geschlossen. Der Laststrom fließt durch die

Inversdioden $D_3$ und $D_4$. Die Spannung über den Schaltern $S_1$ und $S_2$ ist jeweils $v_{C1}=v_{C2}=V_{dc}/2$. Damit sind die Inversdioden $D_1$ und $D_2$ im Sperrzustand.

Das Einschalten des Hilfsschalters $S_{aux3}$ bei $i_{aux}=0$ (ZCS) startet die Kommutierung. Wegen der positiven Spannung von $v_{Laux}=V_{dc}/2$ über der Hilfsinduktivität $L_{aux}$ ist ein positiver Stromanstieg bei dem Strom $i_{aux}$ zu verzeichnen. Wenn der Strom $i_{aux}$ einen Wert $I_{boost}>0$ mit $I_{boost}=i_{aux}-i_o$ erreicht hat, wird die Kommutierung der Hauptschalter durch gleichzeitiges aktives Ausschalten von $T_3$ und $T_4$ gestartet. Der minimale Booststrom $i_{boost}$ ist durch die Umschwing-bedingung $v_{C1}\approx v_{C2}\leq 0$ gegeben, die zur Realisierung des ZVS Verhaltens der Hauptschalter eingehalten werden muß. Die Differenz des Laststromes $i_o$ und des Stromes $i_{aux}$ kommutiert jeweils zur Hälfte in die Entlastungskondensatoren $C_1$ und $C_2$ bzw. $C_3$ und $C_4$, wobei die Kondensatoren $C_1$ und $C_2$ nichtlinear entladen werden, während die Kondensatoren $C_3$ und $C_4$ entsprechend geladen werden.

Wenn die Spannungen über $C_1$ und $C_2$ den Wert $v_{C1}=v_{C2}=0$ erreicht haben, werden die Schalter $S_1$ und $S_2$ unter ZVS Bedingungen eingeschalten. Da die Spannung der Kondensatoren $C_3$ und $C_4$ nun auf $v_{C3}=v_{C4}=V_{dc}/2$ gehalten wird, kommutiert der Laststrom komplett auf die Schalter $S_1$ und $S_2$. Eine negative Spannung $v_{Laux}=-V_{dc}/2$ liegt nun über dem Hilfszweig, die zu einem negativen Gradienten des Stromes $i_{aux}$ führt. Wenn der Strom den Wert $i_{aux}=0$ erreicht hat, kann der Schalter $S_{aux3}$ unter ZCS Bedingungen ausgeschalten werden. Damit ist die Kommutierung beendet und der Stromrichterzweig hat den Zustand "p" erreicht.

Die Kommutierungen für negative Ausgangsströme $i_o<0$ sind wegen der symmetrischen Struktur analog, jedoch sind jetzt die Transitionen p→n ARCP Kommutierungen und die Transitionen n→p kapazitive bzw. ARCP unterstützte kapazitive Kommutierungen.

Im weiteren soll auf die Erweiterung der in Fig. 1 vorgestellten Topologie (Dreipunktstromrichter) auf Mehrpunktstromrichter eingegangen werden.

Hart schaltende Mehrpunktstromrichter mit Entkopplungsdiode können gemäß den oben beschriebenen Erweiterungen zu einem ARCP Stromrichter mit Ladungssteuerungsschaltern modifiziert werden. Die in diesen Stromrichtern möglichen Kommutierungen entsprechen den beschriebenen drei Kommutierungstypen — der ARCP Kommutierung, der kapazitiven Kommutierung und der ARCP unterstützten kapazitiven Kommutierung.

Am Beispiel des im Fig. 6 gezeigten Fünfpunktstromrichters soll auf allgemeine Zusammenhänge bezüglich der Kommutierungen in ARCP Mehrpunktstromrichtern mit Ladungssteuerungsschaltern hingewiesen werden. Obwohl in einem Fünfpunktstromrichter in einem Zustand vier Hauptschalter, anstelle der zwei Hauptschalter im Dreipunktstromrichter, eingeschalten sind, erfolgen Kommutierungen zwischen einer Stromrichterebene und einer darunter oder darüber liegenden Ebene immer mit Hilfe zweier einzelner Hauptschalter. Aufgrund dieser Tatsache lassen sich die für den Dreipunktstromrichter gemachten Angaben direkt übertragen und das Steuerproblem reduziert sich auf die Wahl der richtigen Hilfsschalter $S_{aux}$ und Ladungssteuerungsschalter $S_{n-NPC}$ bzw. $S_{p-NPC}$. Generell kann gesagt werden, daß bei einer ARCP Kommutierung bzw. einer ARCP unterstützten kapazitiven Kommutierung der Hilfsschalter $S_{aux}$ genutzt werden muß, der bezüglich des Spannungspotentials an seinem Anschlußpunkt zu den Gleichspannungskapazitäten genau in der Mitte der beiden Potentiale liegt, zwischen denen die Ausgangsspannung $v_o$ kommutiert wird. So wird zum Beispiel bei der ARCP Kommutierung der Ausgangsspannung $v_o$ von $+V_{dc}/4$ auf $+V_{dc}/2$ bezüglich des Stromrichtermittelpunktes 0, der Schalter $S_{aux1}$, der an einem Potential von $+3/8\,V_{dc}$ bezüglich des Stromrichtermittelpunktes liegt, in Reihe zur Resonanz-Induktivität $L_{aux}$ geschalten.

Die Wahl der Ladungssteuerungsschalter, die an einer bestimmten Kommutierung beteiligt sind, erfolgt in der Art, daß nur die Entlastungskapazitäten während der Kommutierung umgeladen werden, deren parallel geschalteter Hauptschalter am Kommutierungsprozeß mit einer Schalttransition beteiligt ist. Der Kommutierungstyp ist dabei für die Wahl der Ladungssteuerungsschalter unerheblich.

In dem eben beschriebenen Beispiel der Kommutierung der Ausgangsspannung $v_o$ von $+V_{dc}/4$ auf $+V_{dc}/2$ bezüglich des Stromrichtermittelpunktes 0 wären das die Schalter $S_1$ und $S_5$. Von dieser Kommutierung bleiben die geschlossenen Schalter $S_2$, $S_3$ und $S_4$ bzw. die offenen Schalter $S_6$, $S_7$ und $S_8$ unberührt. Mit Hilfe der Ladungssteuerungsschalter sind Strompfade zu gewährleisten, die die Kapazitäten $C_1$ und $C_5$ umladen, ohne dabei die anderen Kapazitäten umzuladen. Dies ist in dem Fall zum einen durch die positive Gleichspannungsschiene 2 und zum anderen durch einen geschlossenen Schalter $S_{n-NPC1}$, gebildet durch $D_{n-NPC1}$ und $T_{n-NPC1}$, zu gewährleisten. Im Detail entspricht diese Kommutierung einer ARCP Kommutierung im Dreipunktstromrichter. In Abhängigkeit von der Richtung des Ausgangsstromes kann teilweise auch auf ein aktives Einschalten der Schalter $T_{n-NPC}$ bzw. $T_{p-NPC}$ verzichtet werden, da die Entlastungsdioden $D_{n-NPC}$ bzw. $D_{p-NPC}$ automatisch eine korrekte Ladungssteuerung vornehmen.

Mit den unter Fig. 6 beschriebenen Modifikationen ist es somit möglich, daß Prinzip der ARCP Kommutierung mit Ladungssteuerungsschaltern auf Mehrpunktstromrichter mit mehr als drei Punkten anzuwenden.

**Patentansprüche**

1. Dreipunkt- oder Mehrpunktstromrichter

- mit einer Reihenschaltung von mindestens vier Hauptschaltern ($S_1...S_8$) pro Stromrichterphase, welche elektrisch parallel zwischen einer positiven und einer negativen Gleichspannungsschiene (2, 4) geschaltet sind,
- wobei parallel zu jedem einzelnen Hauptschalter eine einzelne Entlastungskapazität ($C_1...C_8$) angeordnet ist,
- wobei zwischen den Gleichspannungsschienen (2, 4) mindestens zwei Stromrichterebenen gebildet sind, deren Verbindungspunkt (0) bzw. Verbindungspunkte (0, 1', 3') und Spannungsmittelpunkte (1, 3, 11, 12, 13, 14) verfügbar sind,
- wobei der Ausgang der Stromrichterphase (10) über eine Reihenschaltung mindestens einer Resonanz-Induktivität ($L_{aux}$, $L_{aux1}$, $L_{aux2}$) und unabhängig steuerbarer bidirektionaler Hilfsschalter ($S_{aux1}...S_{aux4}$) mit den Spannungsmittelpunkten (1, 3, 11, 12, 13, 14) der Stromrichterebenen verbunden ist,
- wobei die Verbindungspunkte (7, 9, 17, 19, 27, 49) der Entlastungskapazitäten ($C_1...C_8$), welche nicht gleichzeitig den Ausgang der Stromrichterphase (10) bilden, über Ladungssteuerungsschalter ($S_{n-NPC}$, $S_{p-NPC}$, $S_{n-NPC1}... S_{n-NPC3}$, $S_{p-NPC1}... S_{p-NPC3}$) mit dem Verbindungspunkt (0) bzw. den Verbindungspunkten (0, 1', 3') der Stromrichterebenen verbunden sind (Fig. 1, 2, 4, 6).

2. Dreipunkt- oder Mehrpunktstromrichter nach Anspruch 1, dadurch gekennzeichnet, daß der Ausgang der Stromrichterphase (10) über eine Reihenschaltung lediglich einer einzigen Resonanz-Induktivität ($L_{aux}$) und mehrerer daran angeschlossener unabhängig steuerbarer bidirektionaler Hilfsschalter ($S_{aux1}...S_{aux4}$) mit den Spannungsmittelpunkten (1, 3, 11, 12, 13, 14) der Stromrichterebenen verbunden ist (Fig. 1, 6).

3. Dreipunkt- oder Mehrpunktstromrichter nach Anspruch 2, dadurch gekennzeichnet, daß die einzige Resonanz-Induktivität ($L_{aux}$) über einen weiteren unabhängig steuerbaren bidirektionalen Hilfsschalter ($S_{aux3}$) mit dem Stromrichtermittelpunkt (0) verbunden ist (Fig. 4).

4. Dreipunkt- oder Mehrpunktstromrichter nach Anspruch 1, dadurch gekennzeichnet, daß der Ausgang der Stromrichterphase (10) über getrennte Reihenschaltungen jeweils einer Resonanz-Induktivität ($L_{aux1}$, $L_{aux2}$) und einem unabhängig steuerbaren bidirektionalen Hilfsschalter ($S_{aux1}$, $S_{aux2}$) mit den Spannungsmittelpunkten (1, 3) der Stromrichterebenen verbunden ist (Fig. 2).

5. Dreipunkt- oder Mehrpunktstromrichter

- mit einer Reihenschaltung von mindestens vier Hauptschaltern ($S_1...S_4$) pro Stromrichterphase, welche elektrisch parallel zwischen einer positiven und einer negativen Gleichspannungsschiene (2, 4) geschaltet sind,
- wobei parallel zu jedem einzelnen Hauptschalter eine einzelne Entlastungskapazität ($C_1...C_4$) angeordnet ist,
- wobei zwischen den Gleichspannungsschienen (2, 4) mindestens zwei Stromrichterebenen gebildet sind, deren Verbindungspunkt (0) bzw. Verbindungspunkte und Spannungsmittelpunkte (1, 3) verfügbar sind,
- wobei die Verbindungspunkte (7, 9) der Entlastungskapazitäten ($C_1...C_4$), welche nicht gleichzeitig den Ausgang der Stromrichterphase (10) bilden, über Reihenschaltungen einer Resonanz-Induktivität ($L_{aux1}$, $L_{aux2}$) und unabhängig steuerbarer bidirektionaler Hilfsschalter ($S_{aux1}$, $S_{aux2}$) mit den Spannungsmittelpunkten (1, 3) der Stromrichterebenen verbunden sind,
- wobei die Verbindungspunkte (7, 9) der Entlastungskapazitäten ($C_1...C_4$), welche nicht gleichzeitig den Ausgang der Stromrichterphase (10) bilden, über Ladungssteuerungsschalter ($S_{n-NPC}$, $S_{p-NPC}$) mit dem Verbindungspunkt (0) bzw. den Verbindungspunkten der Stromrichterebenen verbunden sind (Fig. 3).

6. Dreipunkt- oder Mehrpunktstromrichter nach Anspruch 5, dadurch gekennzeichnet, daß der Ausgang der Stromrichterphase (10) zusätzlich über eine Reihenschaltung einer Resonanz-Induktivität ($L_{aux3}$) und einen unabhängig steuerbaren bidirektionalen Hilfsschalter ($S_{aux3}$) mit dem Stromrichtermittelpunkt (0) verbunden ist (Fig. 5).

**Fig. 1**

**Fig. 2**

**Fig. 3**

**Fig. 4**

**Fig. 5**

**Fig. 6**

**Fig. 7**

**Fig. 8**

①　　②　　③　　④　　A　　⑤　　⑥

i_TpNPC

i_DpNPC

i_TnNPC

i_DnNPC

i_Laux

**Fig. 9**

⑦　　⑧　　③　　④　A ⑨　　⑥

vo

vC1

vC2

vC3

vC4

v_SpNPC

v_SnNPC

**Fig. 10**

**Fig. 11**

**Fig. 12**